# DEMANDE DE BREVET EUROPEEN

(11) **EP 2 605 114 A1**
(43) Date de publication de la demande: **19.06.2013**
(21) Numéro de dépôt: 12197229.3
(22) Date de dépôt: 14.12.2012
(51) Int. Cl.: G06F 3/048, G06F 3/0481, G06F 3/0484

(54) **Procédé et dispositif informatique de traitement de données d'interface graphique de consultation de contenus**

(30) Priorité: 16.12.2011 FR 1161776
(71) Demandeur: France Télécom, 75015 Paris (FR)
(72) Inventeur: Berteche, Olivier, 14112 Bieville Beuville (FR); Barthe, Nicolas, 14210 Esquay notre Dame (FR); Chabrier, Thomas, 78430 Louveciennes (FR)

(57) **Abrégé**

L'invention concerne un procédé mis en oeuvre par un dispositif informatique, de traitement de données d'interface graphique de consultation de contenus, dans lequel une suite de vignettes correspondant à des contenus respectifs est affichée sur un écran du dispositif. Le procédé comporte un traitement de données des vignettes pour un affichage (20) de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre. Une commande (22) de déplacement reçue (21) par le dispositif informatique provoque une modification (23, 24) de l'affichage des vignettes en avant-plan et/ou en arrière-plan.

## Description

L'invention concerne un traitement de données d'interface graphique pour l'affichage d'un grand nombre de contenus sur un écran d'un dispositif informatique.

L'affichage sur un écran d'un dispositif informatique d'un grand nombre de contenus est d'autant plus problématique que l'écran du dispositif informatique est petit comme c'est le cas par exemple pour des dispositifs tels qu'une tablette PC (pour Personal Computer en anglais) ou un téléphone mobile. Les contenus affichés peuvent par exemple correspondre à des contenus multimédias, des fichiers de données, des instructions de programme informatique pour l'exécution d'une application ou d'un jeu par exemple, des pages Internet, des contacts d'un carnet d'adresses. L'invention s'applique à tout type de contenus pouvant être représentés sous la forme de vignettes.

On entend par vignette une représentation visuelle d'un contenu, par exemple une imagette représentative du contenu. Par exemple, pour un contenu audio ou vidéo, il peut s'agir de la pochette du disque ou l'affiche du film.

Une technique d'affichage connue pour l'affichage de contenus sur des écrans de taille restreinte est par exemple proposée par l'interface graphique « coverflow » de la société Apple®. Cette technique affiche une vignette centrale au milieu de l'écran et en perspective une suite de vignettes précédentes et suivantes respectivement de chaque côté de la vignette centrale. La navigation parmi la suite des vignettes est effectuée par un défilement des vignettes qui s'affichent successivement en position centrale.

Cette représentation n'est cependant pas adaptée pour l'affichage d'un grand nombre de vignettes car la navigation parmi l'ensemble des vignettes peut être longue et non aisée. A chaque affichage, l'utilisateur n'a qu'un aperçu limité de l'ensemble des vignettes. L'utilisateur ne peut pas avoir un aperçu rapide et ciblé de vignettes particulières.

L'utilisateur doit parcourir un grand nombre de vignettes avant d'atteindre une vignette cible, ce parcours peut de plus être long car l'utilisateur n'a pas forcément connaissance de l'emplacement de la vignette recherchée par rapport à une vignette centrale affichée.

Un des buts de l'invention est d'apporter des améliorations par rapport à l'état de la technique.

Elle propose à cet effet un procédé mis en oeuvre par un dispositif informatique, de traitement de données d'interface graphique de consultation de contenus. Une suite de vignettes correspondant à des contenus respectifs est affichée sur un écran du dispositif. Le procédé comporte un traitement de données des vignettes pour un affichage de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre.

Une commande de déplacement reçue par le dispositif informatique provoque une modification de l'affichage des vignettes en avant-plan et/ou en arrière-plan.

Cette représentation fournie par l'interface graphique permet à un utilisateur d'avoir un aperçu visuel d'un grand nombre de contenus à partir d'un seul affichage. Chaque vignette est lisible ou reconnaissable par l'utilisateur. La représentation permet aussi à l'utilisateur de naviguer plus facilement et plus rapidement dans le grand ensemble de contenus affichés.

L'interface graphique affichée par le procédé de traitement de données d'interface est particulièrement avantageuse pour les dispositifs comportant de petits écrans tels que par exemple des téléphones, des tablettes PC car elle permet d'utiliser de manière optimale la taille de l'écran afin de représenter un maximum de vignettes. Elle offre un plus grand confort de visualisation à l'utilisateur.

Une telle représentation est bien adaptée pour un affichage 3D, bien qu'elle ne soit pas limitée à un tel type d'affichage. En effet, l'utilisation de la profondeur, voire du relief, d'une représentation 3D permet d'optimiser l'affichage d'un grand nombre de contenus sur une petite surface, telle qu'un petit écran. L'affichage des vignettes parait plus aéré, plus léger qu'un ensemble compact de vignettes affichées régulièrement sur l'écran, ce qui offre à l'utilisateur un confort de visualisation plus grand. Ce confort de visualisation se traduit par une lisibilité accrue de l'ensemble des contenus et un repérage parmi l'ensemble des contenus plus rapide et plus facile.

Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation de l'invention, la modification de l'affichage correspond à un déplacement de la suite des vignettes en avant-plan et en arrière-plan le long de la trajectoire s'enroulant autour du cylindre.

Dans ce mode de réalisation, le mode de représentation des vignettes est conservé et les vignettes défilent le long du cylindre permettant à l'utilisateur de naviguer parmi les contenus tout en conservant le confort de visualisation procuré par l'interface graphique.

Selon un autre mode particulier de réalisation de l'invention, la modification de l'affichage correspond à un zoom avant ou arrière des vignettes en arrière-plan le long d'un axe perpendiculaire à l'axe du cylindre.

Ainsi, l'utilisateur peut avoir un aperçu plus restreint de l'ensemble des contenus mais avec une vision plus grande des vignettes affichées ou un aperçu plus grand de l'ensemble des contenus mais avec une vision des vignettes affichées plus petites.

Selon un autre mode particulier de réalisation de l'invention, la commande de déplacement reçue par le dispositif informatique est mise en oeuvre suite à la détection d'une interaction de déplacement effectuée sur l'écran du dispositif par un utilisateur.

Selon un autre mode particulier de réalisation de l'invention, la commande de déplacement reçue par le dispositif informatique est mise en oeuvre suite à la détection d'un mouvement prédéterminé du dispositif effectué par un utilisateur.

Selon un autre mode particulier de réalisation de l'invention, la vitesse de déplacement de la suite des vignettes le long de la trajectoire est fonction de la vitesse et/ou de l'amplitude de l'interaction de déplacement effectué sur l'écran ou du mouvement du dispositif.

L'utilisateur a ainsi la possibilité d'interagir facilement et de manière naturelle avec l'interface graphique.

Selon un autre mode particulier de réalisation de l'invention, les vignettes étant ordonnées, l'interaction de déplacement effectuée sur l'écran du dispositif correspond à une sélection d'un rang de l'ordonnancement des vignettes à partir d'un élément graphique de l'interface affiché sur l'écran du dispositif. Le déplacement de la suite des vignettes est effectué jusqu'à ce que la première vignette appartenant au rang sélectionné soit affichée en avant-plan en position centrale sur la face externe du cylindre.

Pour de très grands ensembles de contenus à afficher, une telle interface graphique permet une navigation plus rapide dans l'ensemble des contenus.

Selon un autre mode particulier de réalisation de l'invention, toutes les vignettes affichées sur la face externe du cylindre et sur la face interne du cylindre peuvent être sélectionnées par un utilisateur.

Ce mode de réalisation permet un gain de temps en termes de manipulation des contenus par l'utilisateur. Lorsqu'un utilisateur recherche un contenu cible pour effectuer une action sur ce contenu, par exemple jouer un morceau de musique, obtenir des informations sur un artiste, etc, l'utilisateur peut directement sélectionner le contenu ou l'action à effectuer à partir de la vignette affichée qui est associée au contenu. Cette vignette peut être affichée à l'avant-plan ou à l'arrière-plan.

L'invention concerne aussi un dispositif informatique de traitement de données d'interface graphique de consultation de contenus, comprenant un écran permettant d'afficher une suite de vignettes correspondant à des contenus respectifs, et des moyens de traitement de données des vignettes pour un affichage de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre, des moyens de réception d'une commande de déplacement et des moyens de modification de l'affichage des vignettes en avant-plan et/ou en arrière-plan.

Les différents modes ou caractéristiques de réalisation mentionnés ci-après peuvent être ajoutés indépendamment ou en combinaison les uns avec les autres, aux caractéristiques du dispositif défini ci-dessus.

Selon un mode particulier de réalisation de l'invention, le dispositif comprend des moyens de détection de mouvement du dispositif.

L'invention concerne aussi un terminal comprenant un dispositif selon l'un quelconque des modes de réalisation cités plus haut.

L'invention concerne aussi un programme d'ordinateur comportant des instructions pour l'exécution du procédé de traitement de données d'interface selon l'un quelconque des modes de réalisation décrits, lorsque le programme est exécuté par un processeur.

L'invention concerne aussi un support d'enregistrement lisible par un processeur sur lequel est enregistré un programme comportant des instructions pour l'exécution du procédé de traitement de données d'interface selon l'un quelconque des modes particuliers de réalisation cités ci-dessus.

Le dispositif, le terminal, le programme et le support d'informations présentent des avantages analogues à ceux du procédé de traitement de données d'interface selon l'invention décrit ci-dessus.

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- La figure 1 illustre une interface graphique utilisée pour la mise en oeuvre du procédé de traitement de données d'interface graphique selon un mode particulier de réalisation de l'invention,
- la figure 2 illustre les étapes du procédé de traitement de données d'interface graphique de consultation de contenus selon un mode particulier de réalisation de l'invention,
- la figure 3 montre une modification de l'interface graphique suite à la mise en oeuvre du procédé selon un mode particulier de réalisation de l'invention,
- la figure 4a illustre une interface graphique utilisée pour la mise en oeuvre du procédé de traitement de données d'interface graphique selon un autre mode particulier de réalisation de l'invention,
- la figure 4b illustre une modification de l'interface graphique suite à la mise en oeuvre du procédé selon un autre mode particulier de réalisation de l'invention,
- les figures 5a et 5b illustrent une interface graphique utilisée pour la mise en oeuvre du procédé de traitement de données d'interface graphique selon d'autres modes particuliers de réalisation de l'invention,
- la figure 6 illustre un dispositif mettant en oeuvre le procédé selon un mode particulier de réalisation de l'invention,
- les figures 7a, 7b et 7c illustrent des modes d'interactions utilisateur possibles lors de la mise en oeuvre du procédé selon un mode particulier de réalisation de l'invention.

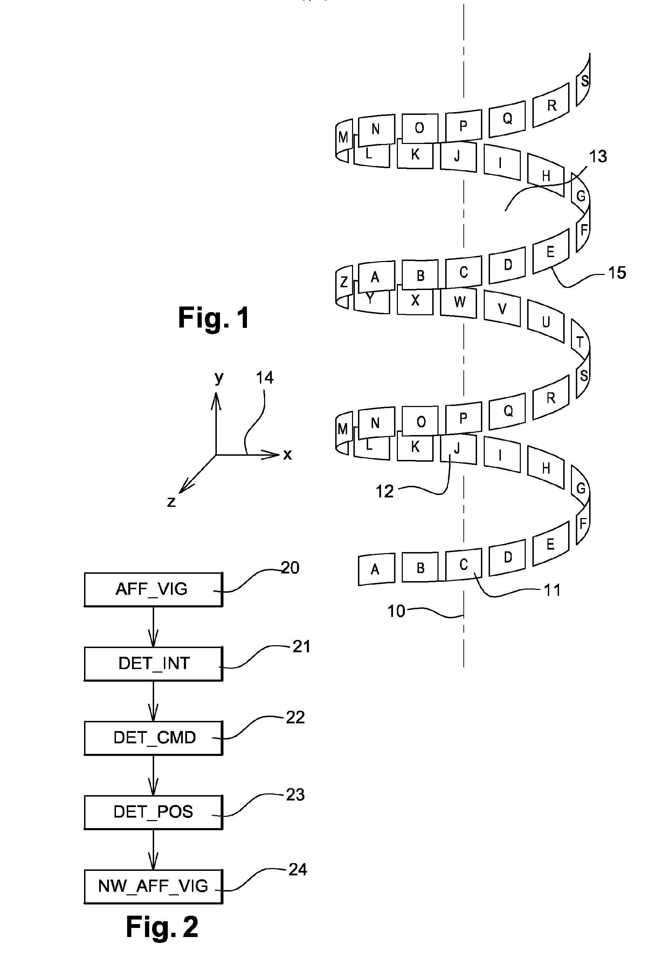

La figure 1 illustre une interface graphique affichée sur un écran d'un dispositif utilisé pour la mise en oeuvre du procédé de traitement de données d'interface graphique selon un mode particulier de réalisation de l'invention.

L'interface graphique permet d'afficher à un utilisateur un grand ensemble de contenus, par exemple une soixantaine, voire une centaine de contenus peuvent être affichés à partir d'un seul affichage. Par exemple, grâce à l'invention, l'utilisateur peut afficher le contenu de sa bibliothèque musicale.

Les contenus représentés correspondent alors aux albums de la bibliothèque musicale. Les contenus représentés peuvent aussi correspondre à des vidéos de films, des pages Internet, des livres, des applications comme par exemple des jeux.

Selon l'invention, les contenus sont représentés à l'aide par exemple de vignettes 2D, ou de cubes 3D. Pour offrir une plus grande attractivité et permettre à l'utilisateur de mieux se repérer dans l'ensemble des contenus affichés, les vignettes peuvent correspondre à la pochette de l'album ou de l'affiche du film du contenu.

Les vignettes sont affichées le long d'une trajectoire ouverte s'enroulant autour d'un cylindre 13 ayant par exemple un axe 10. L'axe 10 est parallèle à l'axe y du repère orthonormal 14.

En variante, le cylindre peut être positionné selon n'importe quelle direction. Cette trajectoire est par exemple une hélice circulaire 15 incluse dans le cylindre 13.

Des vignettes sont affichées en avant-plan 11 sur la face externe du cylindre, et en arrière-plan 12 sur la face interne du cylindre. De cette manière, toutes les vignettes affichées sur les faces du cylindre sont visibles par un utilisateur.

Cette représentation permet à un utilisateur d'avoir un aperçu visuel d'un grand nombre de contenus à partir d'un seul affichage, chaque représentation de contenu, c'est-à-dire chaque vignette, restant lisible par l'utilisateur. En effet, même si les détails des vignettes ne sont pas parfaitement nets, notamment pour les vignettes en arrière-plan, l'utilisateur connaissant les contenus qu'il possède dans sa bibliothèque, reconnaît le visuel, c'est-à-dire la vignette associée à un contenu particulier.

La représentation en hélice permet d'afficher les vignettes sur une trajectoire montante ou descendante tout en tournant autour du cylindre 13. L'hélice portant les vignettes peut tourner selon un mouvement de type vis. Suivant le mouvement de la vis, les vignettes suivent alors un mouvement de rotation autour de l'axe 10 accompagné d'une translation le long de cet axe 10. Par exemple, selon la représentation de la figure 1, lorsque l'hélice tourne de z vers x, les vignettes tournent de z vers x et montent en même temps le long de y. lorsque l'hélice tourne de z vers x, les vignettes tournent de z vers x et montent en même temps dans le sens montant de l'axe y. Lorsque l'hélice tourne de x vers z, les vignettes tournent de x vers z et descendent en même temps dans le sens descendant de l'axe y.

Toutes les faces du cylindre sont utilisées pour l'affichage. La disposition en hélice permet à l'utilisateur d'avoir une bonne visibilité non seulement des vignettes en avant-plan mais aussi des vignettes en arrière-plan.

Cette représentation permet aussi à l'utilisateur de naviguer plus facilement et plus rapidement dans le grand ensemble de contenus affichés. En effet, lors de la recherche d'un contenu cible, si la vignette associée au contenu n'est pas affichée à l'écran, l'utilisateur peut déplacer les vignettes suivantes ou précédentes en les faisant défiler autour du cylindre le long de la trajectoire en hélice. Ce défilement est effectué en faisant tourner l'hélice autour du cylindre. Grâce à la représentation telle qu'illustrée en figure 1, le pas de déplacement des vignettes est assez grand, de l'ordre d'une douzaine de vignettes pour un tour de cylindre. Ainsi, même un petit déplacement des vignettes le long du cylindre permet de parcourir un nombre de vignettes plus important qu'avec les représentations de l'état de la technique classiques.

Cette représentation est avantageuse pour les dispositifs disposant de petits écrans tels que par exemple des téléphones, des tablettes PC car elle permet d'utiliser de manière optimale la taille de l'écran afin de représenter un maximum de vignettes. L'utilisation de la perspective, voire de la profondeur et du relief pour une représentation en 3D permet d'offrir à l'utilisateur un champ visuel plus grand des contenus affichés.

La représentation en hélice est particulièrement bien adaptée à un affichage sur un écran en 3D. L'affichage en 3D ajoute de la profondeur et du relief à la représentation en hélice et procure ainsi un confort de visualisation supplémentaire à l'utilisateur.

La représentation telle qu'illustrée en figure 1 utilise une trajectoire ouverte. Certaines vignettes peuvent ne pas être affichées à l'utilisateur du fait de la petite taille de l'écran utilisé par exemple. Ces vignettes seront affichées lors de la navigation dans l'ensemble des contenus.

La trajectoire ouverte permet à l'interface graphique d'afficher toutes les vignettes le long de l'hélice « à l'infini ». Lors de la navigation de l'utilisateur parmi l'ensemble des contenus, lorsque toutes les vignettes de l'ensemble ont été affichées, l'interface graphique affiche à nouveau de manière continue les premières vignettes de l'ensemble. Ainsi, un utilisateur naviguant parmi toutes les vignettes, revient au début de l'ensemble des vignettes sans avoir besoin de parcourir en sens inverse toutes les vignettes précédemment affichées.

Selon un mode particulier de réalisation de l'invention, l'utilisateur peut sélectionner n'importe quelle vignette affichée par l'interface graphique afin par exemple de jouer un album de musique ou regarder un film sur son dispositif ou d'entreprendre n'importe quelle action disponible avec le contenu associé à la vignette sélectionnée.

La figure 2 illustre les étapes du procédé de traitement de données d'interface graphique de consultation de contenus selon un mode particulier de réalisation de l'invention.

Le procédé comprend une étape 20 d'affichage des vignettes (AFF_VIG) selon l'interface graphique illustrée en figure 1. Cet affichage est effectué sur un écran d'un dispositif au moyen par exemple d'un programme logiciel et/ou d'une carte graphique.

Pour réaliser cet affichage, les vignettes sont plaquées sur la forme du cylindre. En fonction du point de vue de l'utilisateur, qui peut correspondre à la position d'une caméra d'une représentation 3D d'une scène, le contenu des vignettes en arrière-plan est retourné. De cette manière, les vignettes en arrière-plan qui ont été plaquées sur la face externe du cylindre apparaissent ainsi sur la face interne du cylindre et sont visibles et reconnaissables en arrière-plan par un utilisateur.

La distinction des vignettes retournées est par exemple effectuée à la frontière des vignettes en avant-plan et en arrière-plan. Cette frontière correspond par exemple à la position du cylindre à laquelle la tangente à la face externe du cylindre est perpendiculaire à l'axe de point de vue de l'utilisateur. Les vignettes plaquées sur le cylindre en avant-plan par rapport à cette position sont affichées sur la face externe du cylindre, les vignettes plaquées sur le cylindre en arrière-plan par rapport à cette position sont retournées et affichées sur la face interne du cylindre.

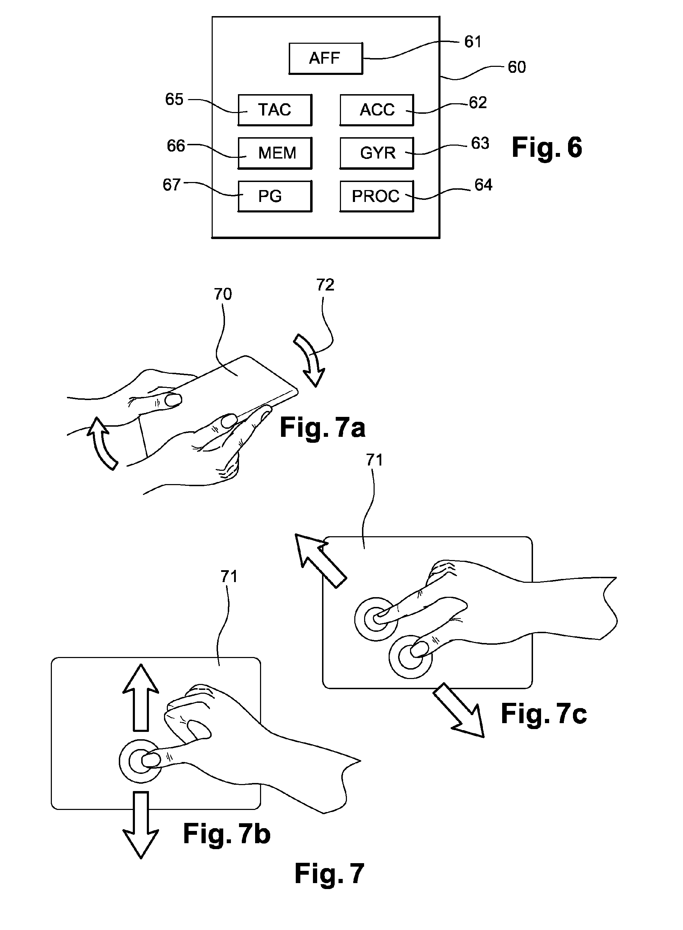

Selon un mode particulier de réalisation de l'invention, lors d'une étape 21, le procédé détecte (DET_INT) une interaction utilisateur effectuée sur le dispositif. Le type d'interaction possible est par exemple décrit en relation avec les figures 7a, 7b et 7c.

La figure 7a illustre une interaction utilisateur mise en oeuvre à partir d'un mouvement effectué avec le dispositif 70 mettant en oeuvre le procédé selon l'invention. Par exemple, l'utilisateur peut faire pivoter le dispositif 70 du haut vers le bas comme illustré par la flèche 72 sur la figure 7a. L'utilisateur effectue ainsi une commande de déplacement des données de l'interface affichée.

Les figures 7b et 7c illustrent une interaction utilisateur effectuée par l'utilisateur sur un écran tactile 71 du dispositif 70. La figure 7b illustre une interaction de zoom effectuée par l'utilisateur à l'aide de deux doigts de l'utilisateur en contact avec l'écran. Par exemple, lorsque les deux doigts s'écartent, l'utilisateur effectue une commande de zoom avant ou d'agrandissement des données de l'interface affichée. Lorsque les deux doigts se rapprochent, l'utilisateur effectue une commande de zoom arrière ou de rétrécissement des données de l'interface affichée.

La figure 7c illustre une interaction de déplacement effectuée par l'utilisateur à l'aide d'un doigt en contact avec l'écran. Par un déplacement de son doigt sur l'écran selon une direction déterminée, l'utilisateur effectue une commande de déplacement des données de l'interface affichée. Le procédé selon l'invention n'est pas limité aux types d'interaction décrits ci-dessus, d'autres types d'interaction utilisateur peuvent être envisagés, par exemple une interaction sur l'écran à l'aide d'un stylet, ou du pointeur d'une souris.

En relation avec la figure 2, le procédé détermine, lors d'une étape 22, en fonction de l'interaction utilisateur et des paramètres de l'interaction, une commande à effectuer (DET_CMD). Cette commande peut par exemple correspondre à un agrandissement, un rétrécissement ou un défilement des vignettes affichées grâce à l'interface graphique. La commande peut aussi correspondre à un changement de point de vue de l'affichage de l'interface graphique.

La commande ainsi déterminée à l'étape 22 constitue une commande de modification de l'affichage des vignettes de l'interface graphique.

Selon un mode particulier de réalisation de l'invention, le procédé prend en compte des paramètres de l'interaction détectée à l'étape 21. Ces paramètres peuvent par exemple correspondre à la vitesse de déplacement et/ou à l'orientation du déplacement effectué par l'utilisateur avec son doigt sur l'écran ou à l'amplitude de déplacement de son doigt sur l'écran ou de la rotation effectuée avec le dispositif, ou du déplacement effectué avec ses deux doigts sur l'écran.

Le procédé détermine lors d'une étape 23 (DET_POS), les nouvelles positions des vignettes affichées par l'interface graphique à partir de la commande déterminée à l'étape 22 et des paramètres de l'interaction utilisateur.

Par exemple, si l'utilisateur a effectué un déplacement de faible amplitude, le déplacement effectué par les vignettes sera petit. Un petit nombre de nouvelles vignettes apparaîtront et un petit nombre de vignettes disparaîtront.

Au contraire, si l'utilisateur a effectué un déplacement de grande amplitude, le déplacement effectué par les vignettes sera grand. Un grand nombre de nouvelles vignettes apparaîtront et un grand nombre de vignettes disparaîtront.

Le procédé affiche, lors d'une étape 24 (NW_AFF_VIG), les vignettes à leur nouvelle position déterminée à l'étape 23. En fonction de cette nouvelle position par rapport à la frontière déterminant les vignettes en avant-plan et les vignettes en arrière-plan, des vignettes peuvent subir un retournement tel que décrit à l'étape 20.

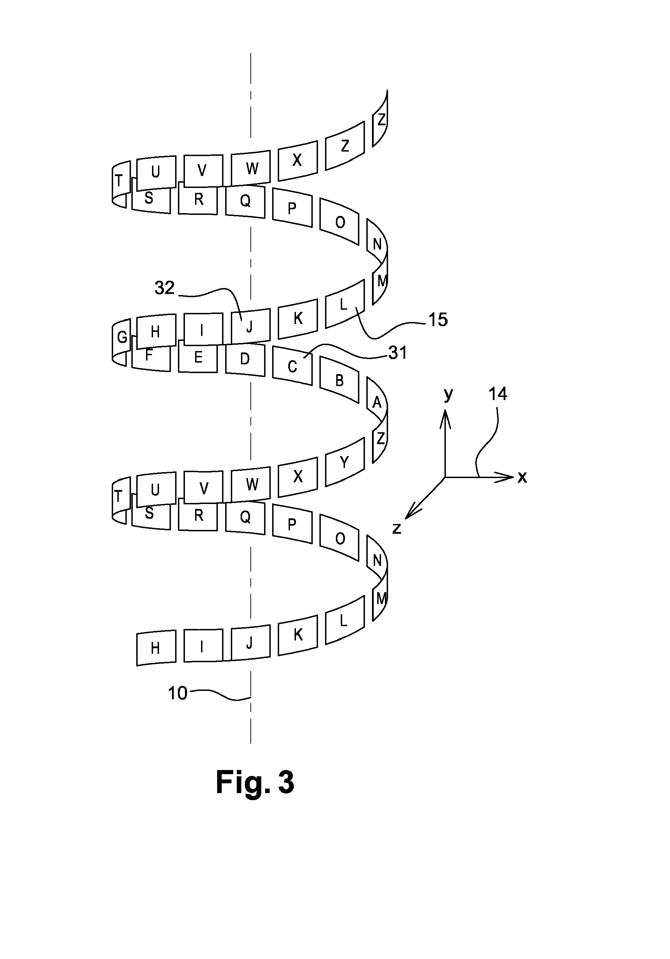

La figure 3 illustre une modification de l'affichage des vignettes en avant-plan et en arrière-plan suite à un déplacement des vignettes le long d'une hélice 15. Ce déplacement a pu être commandé à l'aide d'une interaction utilisateur du type de la figure 7a ou 7c par exemple.

La vignette en avant-plan 11 de la figure 1 est déplacée à l'emplacement 31 en arrière-plan sur la figure 3 et la vignette 12 en arrière-plan de la figure 1 est déplacée à l'emplacement 32 en avant-plan sur la figure 3.

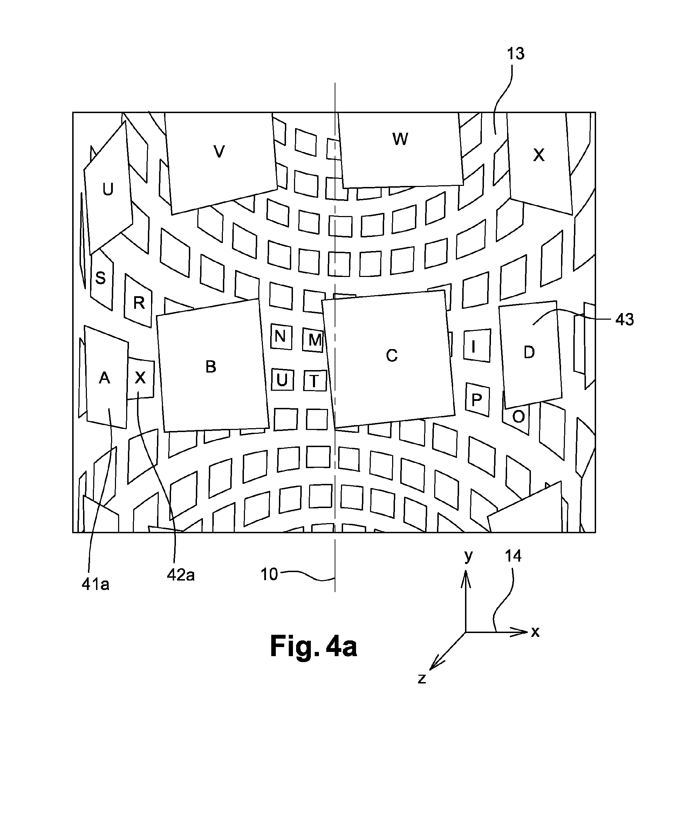

La figure 4a illustre l'interface graphique et la représentation en hélice telle qu'illustrée à la figure 1 mais présentant un point de vue de l'utilisateur plus proche du cylindre 13. Une hélice 43 s'enroulant autour du cylindre 13 est présentée, elle comporte par exemple la vignette en avant-plan 41a affichée sur la face externe du cylindre 13 et la vignette 42a affichée sur la face interne du cylindre 13.

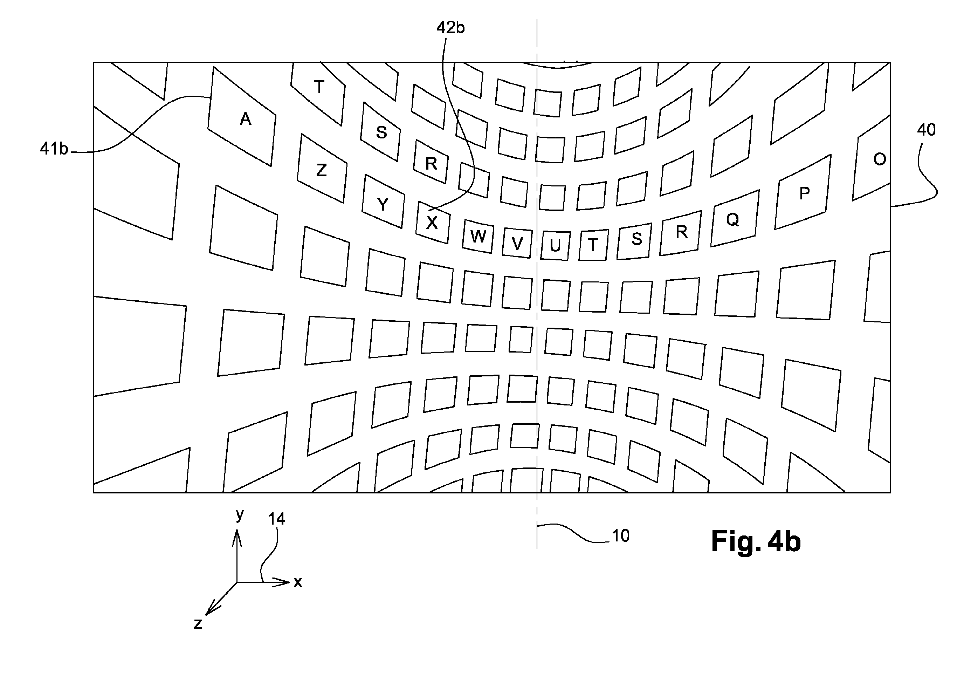

La figure 4b illustre une modification de l'affichage des vignettes suite à une interaction de zoom avant de l'utilisateur. L'opération de zoom est effectué le long d'un axe perpendiculaire à l'axe du cylindre (axe z sur le repère orthonormal 14). Le point de vue de l'utilisateur est modifié et est positionné à l'intérieur du cylindre portant l'hélice. L'interface graphique affiche les vignettes sur la face interne 40 du cylindre. L'interface graphique affiche les vignettes initialement affichées en arrière-plan sur la face interne du cylindre, ainsi qu'une partie des vignettes affichées sur la face externe du cylindre. Les vignettes qui étaient affichées sur la face externe ont subi un retournement afin d'être affichées sur la face interne du cylindre.

La vignette 41a de la face externe du cylindre sur la figure 4a est affichée à l'emplacement 41b de la face interne du cylindre sur la figure 4b. La vignette 42a de la face interne du cylindre sur la figure 4a est affichée à l'emplacement 42b de la face interne du cylindre sur la figure 4b.

Cette représentation offre à l'utilisateur un aperçu visuel de l'ensemble de ses contenus de manière optimale par rapport à l'écran utilisé pour la visualisation des vignettes. La représentation sur la face interne d'un cylindre permet d'ajouter de la profondeur à la représentation, le procédé de traitement des données de l'interface graphique effectue un traitement de la forme des vignettes afin de la projeter sur la surface du cylindre. Les vignettes ainsi projetées peuvent apparaître de différentes tailles selon la distance apparente à l'utilisateur. Cet effet permet d'optimiser l'espace d'affichage de l'écran en allégeant la représentation qui offre à l'utilisateur un confort de visualisation plus grand qu'un affichage classique 2D ou sans perspective. Les vignettes n'apparaissent pas tassées et serrées à l'utilisateur.

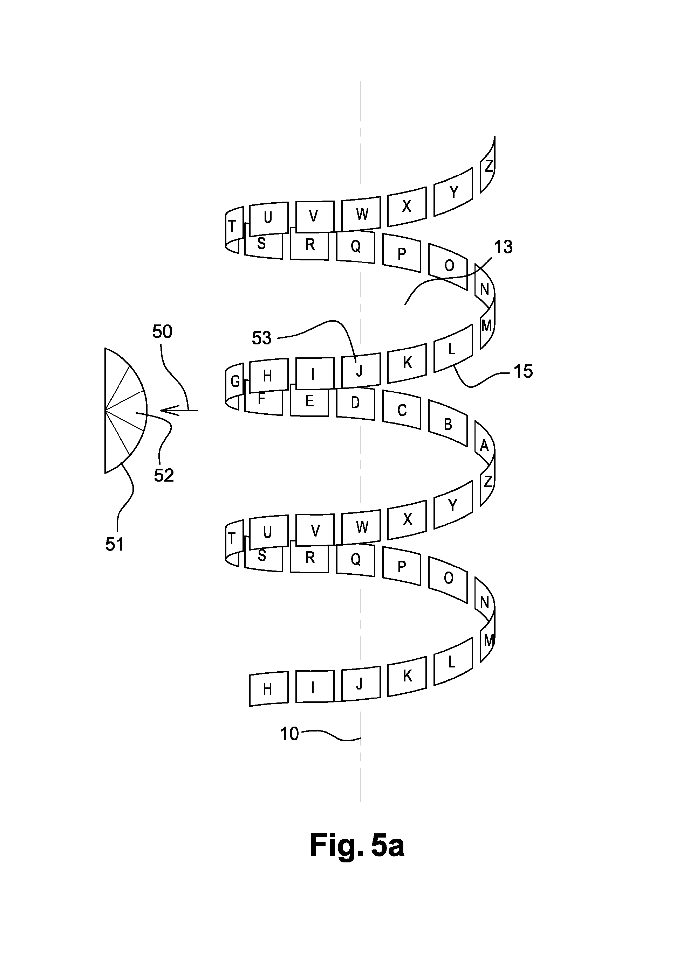

La figure 5a illustre une interface graphique permettant de mettre en oeuvre le procédé de traitement de données selon un autre mode particulier de réalisation de l'invention. Selon ce mode de réalisation, les vignettes à afficher par l'interface graphique selon la représentation en hélice sont classées selon un ordre prédéterminé. Par exemple, les vignettes peuvent être classées par ordre alphabétique ou par catégories en fonction du type du contenu ou du thème du contenu.

D'autres modes de classement sont envisageables.

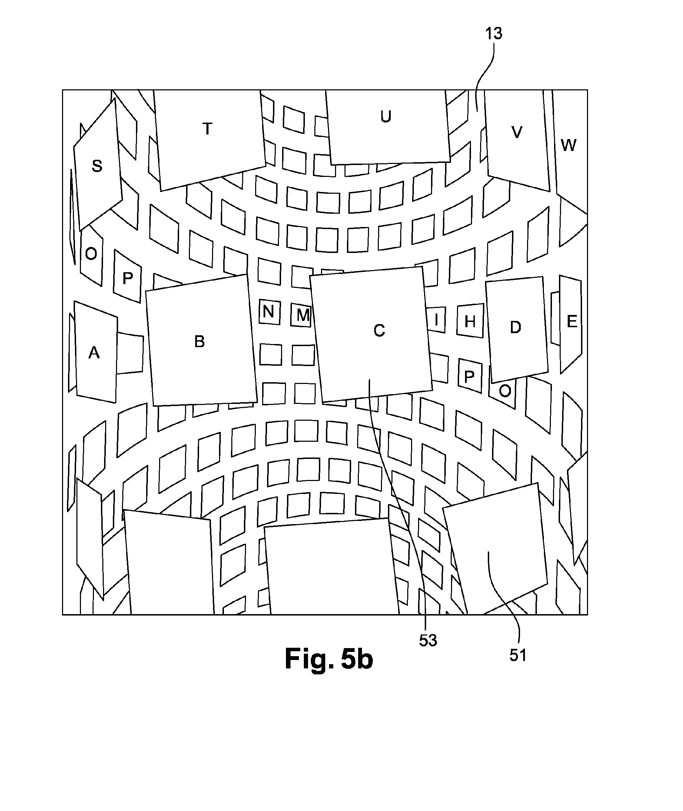

L'interface graphique comporte un élément graphique 51 permettant une sélection d'une catégorie 52 de vignettes parmi la suite de vignettes. Un curseur 50 permet d'identifier la catégorie sélectionnée 52 par un utilisateur. Dans l'exemple représenté ici en figure 5, l'élément graphique correspond à une roue de sélection comportant des tranches correspondant chacune à une catégorie déterminée. Une sélection d'une catégorie par un utilisateur, par exemple en faisant tourner la roue avec le doigt sur l'écran ou en faisant pivoter le dispositif pour mettre en oeuvre une commande de déplacement, provoque une modification de l'affichage des vignettes sur la représentation en hélice 15. Le déplacement des vignettes est effectué en déplaçant les vignettes le long des trajectoires de l'hélice 15 portée par le cylindre 13. Le déplacement des vignettes est effectué jusqu'à ce que la première vignette appartenant au rang ou à la catégorie sélectionnée 52 soit affichée à l'utilisateur en avant-plan en position centrale 53 sur la face externe du cylindre.

Selon un autre mode particulier de réalisation de l'invention, les vignettes ne sont pas classées initialement. La sélection d'une catégorie ou d'un rang sur l'élément graphique provoque la mise en oeuvre d'une étape d'identification de vignettes de la suite de vignettes appartenant à cette catégorie. Les vignettes identifiées sont ensuite affichées par la représentation en hélices.

La figure 5b illustre une variante de l'interface graphique permettant de mettre en oeuvre le procédé de traitement de données selon un mode particulier de réalisation de l'invention. L'élément graphique 51 permettant une sélection d'une catégorie de vignettes est ici représenté en bas du cylindre 13 sous la forme d'une roue présentant les lettres de l'alphabet, pour un classement par ordre alphabétique des contenus par exemple. L'interface graphique représentée sur la figure 5b montre la représentation en hélice telle qu'illustrée à la figure 1 mais présentant un point de vue de l'utilisateur plus proche du cylindre 13. La position centrale 53 affichant la première vignette appartenant à la catégorie sélectionnée par l'utilisateur est dans ce mode de réalisation centrée au milieu de l'écran d'affichage.

Selon un mode particulier de réalisation de l'invention, la sélection d'une catégorie à partir de l'élément graphique 51 peut provoquer une étape préalable permettant à la représentation par hélices de passer du point de vue de l'utilisateur tel que représenté à la figure 1 au point de vue tel que représenté à la figure 5b.

La figure 6 illustre l'architecture d'un dispositif informatique 60 mettant en oeuvre le procédé de traitement de données selon un mode particulier de réalisation de l'invention.

Le dispositif comprend un espace de stockage 66, par exemple une mémoire (MEM), une unité de traitement 64, équipée par exemple d'un microprocesseur (PROC), et pilotée par le programme d'ordinateur (PG) 67, mettant en oeuvre le procédé de traitement de données tel que décrit dans l'invention.

A l'initialisation, les instructions de code du programme d'ordinateur 67 sont par exemple chargées dans une mémoire RAM avant d'être exécutées par le processeur de l'unité de traitement 64. Le microprocesseur de l'unité de traitement 64 met en oeuvre les étapes du procédé de traitement de données d'interface graphique de consultation de contenus, dans lequel une suite de vignettes correspondant à des contenus respectifs est affichée sur un écran du dispositif, et notamment les étapes de traitement de données des vignettes pour un affichage de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre, et la réception d'une commande de déplacement provoquant une modification de l'affichage des vignettes en avant-plan et/ou en arrière-plan, selon les instructions du programme d'ordinateur 67.

Pour cela, les données d'interface graphique sont stockées en mémoire 66. Les données d'interface graphique correspondent notamment aux données relatives aux vignettes, par exemple à leur position, taille, forme, représentation visuelle à afficher, type de contenu associé à chaque vignette, emplacement du contenu associé à chaque vignette. Les données d'interface graphique comprennent également stockées en mémoire les paramètres de la forme sur laquelle les vignettes vont être affichées, par exemple dans le mode de réalisation décrit ici en relation avec la figure 1 sur des trajectoires d'hélices portées par un cylindre. Les paramètres de taille du cylindre et du nombre d'hélices à afficher sont stockés en mémoire 66.

Pour l'affichage des vignettes le long d'au moins une hélice portée par un cylindre, par exemple pour l'étape 20 ou 24 de la figure 2, le procédé de traitement de données d'interface graphique consulte la mémoire 66 afin d'extraire les paramètres relatifs à la au moins une hélice et les données relatives aux vignettes à afficher. A partir des paramètres et des données, le programme d'ordinateur 67 calcule la position de chaque vignette de la suite de vignettes. Selon le mode de réalisation de l'invention, cette position peut correspondre à une position 2D ou 3D selon que l'écran du dispositif permet un affichage 2D ou 3D.

Le dispositif comprend aussi des moyens d'affichage 61 (AFF) tels que par exemple un écran d'affichage et/ou une carte graphique permettant d'afficher les vignettes représentées par l'interface graphique à partir des positions et des données relatives aux vignettes préalablement extraites. Selon le mode de réalisation de l'invention, la position des vignettes peut être calculée par un programme d'ordinateur d'une carte graphique du dispositif informatique 60.

Le dispositif comprend des moyens d'interaction utilisateur 62,65, 63 (I/O) tels que par exemple un clavier ou un écran tactile (TAC) permettant à un utilisateur d'interagir avec le procédé de traitement de données à partir de l'écran du dispositif, ou un accéléromètre (ACC) et un gyroscope (GYR) permettant à l'utilisateur d'interagir avec le procédé de traitement de données en faisant pivoter le dispositif 60.

Selon un mode particulier de réalisation de l'invention, le dispositif informatique 60 peut être intégré dans un terminal de type tablette PC, téléphone intelligent (smartphone en anglais), ou téléphone mobile, ou fixe comprenant des capacités d'affichage.

Selon un mode particulier de réalisation de l'invention, le dispositif informatique 60 peut être intégré dans une télévision ou un ordinateur personnel.

## Revendications

1. Procédé mis en oeuvre par un dispositif informatique, de traitement de données d'interface graphique de consultation de contenus, dans lequel une suite de vignettes correspondant 5 à des contenus respectifs est affichée sur un écran du dispositif, **caractérisé en ce qu'il** comporte un traitement de données des vignettes pour un affichage (20) de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre, et **en ce qu'**une commande (22) de déplacement reçue (21) par le dispositif informatique provoque une modification (23, 24) de l'affichage des vignettes en avant-plan et/ou en arrière-plan.

2. Procédé selon la revendication 1 **caractérisé en ce que** la modification de l'affichage correspond à un déplacement de la suite des vignettes en avant-plan et en arrière-plan le 15 long de la trajectoire s'enroulant autour du cylindre.

3. Procédé selon la revendication 1 **caractérisé en ce que** la modification de l'affichage correspond à un zoom avant ou arrière des vignettes en arrière-plan le long d'un axe perpendiculaire à l'axe du cylindre

4. Procédé selon la revendication 3, **caractérisé en ce que**, en cas de zoom avant, le point de vue de l'utilisateur est modifié et positionné à l'intérieur du cylindre, les vignettes étant affichées sur la face interne du cylindre.

5. Procédé selon la revendication 4 **caractérisé en ce que**, les vignettes initialement affichées sur la face externe du cylindre ont subi un retournement avant d'être affichées sur la face interne du cylindre.

6. Procédé selon la revendication 1 **caractérisé en ce qu'il** comprend une étape de traitement de la forme des vignettes afin de la projeter sur la surface du cylindre, les vignettes projetées apparaissant avec différentes tailles selon la distance apparente à l'utilisateur.

7. Procédé selon la revendication 1 **caractérisé en ce que** la commande de déplacement reçue par le dispositif informatique est mise en oeuvre suite à la détection d'une interaction de déplacement effectuée sur l'écran du dispositif par un utilisateur.

8. Procédé selon la revendication 1 **caractérisé en ce que** la commande de déplacement reçue par le dispositif informatique est mise en oeuvre suite à la détection d'un mouvement prédéterminé du dispositif effectué par un utilisateur.

9. Procédé selon la revendication 2 et l'une quelconque des revendications 7 ou 8 **caractérisé en ce que** la vitesse de déplacement de la suite des vignettes le long de la trajectoire est fonction de la vitesse et/ou de l'amplitude de l'interaction de déplacement effectué sur l'écran ou du mouvement du dispositif.

10. Procédé selon la revendication 7 **caractérisé en ce que**, les vignettes étant ordonnées, l'interaction de déplacement effectuée sur l'écran du dispositif correspond à une sélection d'un rang de l'ordonnancement des vignettes à partir d'un élément graphique de l'interface affiché sur l'écran du dispositif, le déplacement de la suite des vignettes étant effectué jusqu'à ce que la première vignette appartenant au rang sélectionné soit affichée en avant-plan en position centrale sur la face externe du cylindre.

11. Procédé selon la revendication 1 **caractérisé en ce que** toutes les vignettes affichées sur la face externe du cylindre et sur la face interne du cylindre peuvent être sélectionnées par un utilisateur.

12. Dispositif informatique de traitement de données d'interface graphique de consultation de contenus, comprenant un écran (61) permettant d'afficher une suite de vignettes correspondant à des contenus respectifs, **caractérisé en ce qu'il** comporte :
- des moyens de traitement (64, 67, 66) de données des vignettes pour un affichage de la suite des vignettes le long d'une trajectoire ouverte s'enroulant autour d'un cylindre, de sorte que des vignettes sont affichées en avant-plan sur une face externe du cylindre, et en arrière-plan sur une face interne du cylindre,
- des moyens de réception (65) d'une commande de déplacement
- des moyens de modification (64, 67) de l'affichage des vignettes en avant-plan et/ou en arrière-plan.

13. Dispositif selon la revendication 12 **caractérisé en ce qu'il** comprend des moyens de détection de mouvement (62, 63) du dispositif.

14. Terminal comprenant un dispositif selon l'une quelconque des revendications 12 ou 13.

15. Programme d'ordinateur comportant des instructions pour l'exécution du procédé de traitement de données selon l'une quelconque des revendications 1 à 11, lorsque le programme est exécuté par un processeur.
